# EUROPÄISCHE PATENTSCHRIFT

(11) **EP 1 735 079 B1**
(45) Veröffentlichungstag und Bekanntmachung des Hinweises auf die Patenterteilung: **07.05.2008**
(21) Anmeldenummer: 05730723.3
(22) Anmeldetag: 06.04.2005
(51) Int. Cl.: B01D 53/18, B01D 53/52

(54) **HOCHDRUCKGASWASCHER ZUR ENTSCHWEFELUNG VON KOKSOFENGAS**
HIGH-PRESSURE GAS SCRUBBER FOR DESULPHURIZING COKE OVEN GAS
LAVEUR DE GAZ HAUTE PRESSION SERVANT A DESULFURER LE GAZ DE COKERIE

(30) Priorität: 13.04.2004 DE 102004018362
(43) Veröffentlichungstag der Anmeldung: 27.12.2006
(73) Patentinhaber: DMT GmbH, 45307 Essen (DE)
(72) Erfinder: WEITAUER, Rainer, 47441 Moers (DE); BOHMFALK, Hans-Jörg, 45711 Datteln (DE); HASSE, Hans-Jürgen, 45134 Essen (DE)
(86) Internationale Anmeldenummer: PCT/EP2005/003583
(87) Internationale Veröffentlichungsnummer: WO 2005/102502

(56) Entgegenhaltungen:
- EP-A- 1 153 639
- DE-U1- 8 425 555
- GB-A- 1 447 711
- US-A- 4 933 047

## Beschreibung

Die Erfindung betrifft einen Hochdruckgaswascher zur Schwefelwasserstoffabscheidung aus einem schwefelwasserstoffhaltigen Gas, beispielsweise Koksofengas, der im wesentlichen aus einem zylindrischen mindestens eine Reaktionsstrecke aufweisenden Behälter besteht, wobei jeder Reaktionsstrecke Natronlauge als Waschmittel in unterschiedlicher Konzentration im Gegenstrom zu dem von unten über Kaminabzugsböden zugeführten schwefelwasserstoffhaltigem Gas seitlich eingeführt und von oben eingedüst wird und das gereinigte Gas über einen Abzugsraum im oberen Teil des Behälters abgeführt und das angereicherte Waschmittel über die Kaminabzugsböden abgezogen wird, und dass unterhalb des untersten Kaminabzugsbodens und zwischen der Bedüsung und einem Kaminabzugsboden leicht benetzbare Streckmetalleinbauten vorgesehen sind

Der gattungsgemäße Hochdruckgaswascher ist in der EP 0 956 140 B1 näher beschrieben. Ein derartiger H₂S-Wascher oder -abscheider mit einem oder mehreren übereinander angeordneten Reaktionsstrecken weist, bezogen auf die Konstruktion und den Wirkungsgrad, d.h. die Qualität und die Wirtschaftlichkeit der Gasreinigung, eine erhebliche Anzahl von Nachteilen auf.

So werden, bedingt durch die Ausführung der Kamine in den Kaminabzugsböden unterschiedliche Gasgeschwindigkeiten innerhalb der Bodendurchtritte sowie hohe Druckverluste neben Gasverwirbelungen und Randgängigkeiten erzeugt. Darüber hinaus behindert eine solche Konstruktion in ihrer Gesamtheit den Kontakt und die Verweildauer des Waschmediums mit dem Gas zum Nachteil eines entsprechenden Wirkungsgrades. Die Kaminabzugsböden weisen im Hinblick auf größere Druckschwankungen keine ausreichende Stabilität auf und erfordern bei anfallenden, durch Verschmutzungen und Ablagerungen hervorgerufene Reparaturarbeiten konstruktionsbedingt lange Stillstands- oder Ausfallzeiten. Das angereicherte Waschmedium wird in Bodennähe sofort abgezogen und erzeugt auf diese Weise unnötige Verschmutzungen und Ablagerungen, insbesondere auf den Kaminabzugsböden.

Ausgehend von den beschriebenen Nachteilen des Standes der Technik liegt der Erfindung die Aufgabe zugrunde, einen Hochdruckgaswascher oder -abscheider von Schwefelwasserstoff aus beispielsweise Koksofengas zu schaffen, der in der Lage ist, die Gasmenge und deren Verteilung in der Reaktionsstrecke vor und nach dem Bodendurchtritt zu verbessern, die Druckverluste, die Verwirbelungen und Randgängigkeit zu reduzieren sowie den Kontakt und die Verweildauer des Waschmediums mit dem Gas in Hinblick auf eine bessere Auswaschung ebenso zu verbessern wie eine allgemeine Reparaturfreundlichkeit und auch einen Puffer an Waschflüssigkeit zu gewährleisten.

Die Aufgabe wird erfindungsgemäß dadurch gelöst, dass der Kaminabzugsboden an einem mit der Behälterwand verschweißten Flachstahlring lösbar befestigt und mit einem Gefälle versehen ist, und dass die durch einen vergrößerten Querschnitt einen geringeren Druckverlust gewährleistenden Kamine eine, einen oberhalb des Kaminabzugsboden angeordneten Sicherheitsablauf überragende Höhe aufweisen.

Der Vorteil einer derartigen Gestaltung eines Hochdruckgaswaschers liegt zunächst darin, das der Kaminabzugsboden bezogen auf den zur Verfügung stehenden Innendurchmesser des Waschers und unter statischen Gesichtspunkten eine wesentliche Erhöhung des freien Gasquerschnitts ermöglicht, wodurch die Anforderungen und die Gasverteilung verbessert werden. Die Waschflüssigkeit kann bei Bedarf aufgrund des Gefälles des Kaminabzugsbodens gezielt ablaufen, um zu vermeiden, dass bei Außerbetriebnahme des Waschers Waschflüssigkeit auf dem Boden verbleibt. Die erforderliche und notwendige Stabilisierung des Bodens erfolgt durch quer im Wascher verlaufende, in Richtung des Gefälles an der Behälterwand angeschweißte Winkel, auf denen die den Boden bildenden Segmente oder Segmentbleche lösbar durch Verschrauben befestigt sind.

Die Winkelbleche sind nicht nur Tragkonstruktion für die Segmentbleche, sondern vermeiden, dass sich der Boden aufgrund des Gasdruckes verformt oder angehoben wird. Das Gas strömt ohne größere Druckverluste durch die vergrößerten Kamine und wird über die unterschiedlichen Abdeckbleche auf den Kaminen gezielt in die Reaktionsstrecke eingeleitet. Die Form und Anordnung der Abdeckbleche ermöglichen eine gleichmäßige, homogene Anströmung und Verteilung der Gasmenge im freien Querschnitt des Waschers. Die Gasgeschwindigkeit und Gasverteilung beim Austritt aus den Kaminen ist durch die Schrägen und abstimmbare Winkel der Abdeckbleche so wählbar, dass bei einem minimalen Druckverlust in den Kaminen beim Austritt der größtmögliche Querschnitt des Waschers sofort und auch der oberhalb des Bodens angeordneten Streckmetallpakete nutzbar wird. Die Abdeckbleche in besonderer Form, als dachartige Schrägen ausgebildet, in der Nähe der Behälterwand vermeiden die für den Waschprozess ungünstige Randgängigkeit des Gases.

Im Gegenzug wird das Waschmedium Natronlauge über Einspritzdüsen in den Wascher verteilt. Nach Passieren der Streckmetallpakete gelangt die angereicherte Flüssigkeit zum Teil über Rinnen bildende Abdeckbleche und zum Teil direkt auf die Bodensegmente, ohne den Gasfluss und die -verteilung negativ zu beeinflussen. Die angereicherte Flüssigkeit wird in der aus Blechen gefertigten, seitlich geschlossenen Ablauftasche und bis zu einer definierten Füllstandshöhe auf dem mit Gefälle versehenen Kaminabzugsboden gesammelt, wobei die Ablauftasche gleichzeitig als Pumpenvorlage dient. Die Flüssigkeit wird über einen Ablaufstutzen der Saugleitung einer Pumpe und damit dem Waschprozess erneut zugeführt. Beim Überschreiten einer bestimmten Füllstandshöhe wird die Flüssigkeit über den oberhalb des Bodens angeordneten Sicherheitsablauf in den Sumpf des Waschers abgeführt. Diese Anordnung bildet ein Sicherheitskonzept, um bei Betriebsstörungen oder beim Ausfall oder Umschalten der Pumpen zu verhindern, dass die Waschflüssigkeit auf dem Boden bis zum Austritt der Kamine ansteigt und damit direkt in den Gasweg gelangt.

Der Kaminabzugsboden ist in Verbindung mit den beschriebenen, dazu gehörigen Einrichtungen so wartungsfreundlich konstruiert, dass er entweder komplett oder aber einzelne Segmente auf einfache Weise demontiert werden können, ohne dass Schweißnahtverbindungen getrennt werden müssen.

Ein Ausführungsbeispiel der Erfindung ist in den Zeichnungen dargestellt und wird im nachfolgenden näher erläutert. Es zeigen:
- Figur 1: einen teilweisen Schnitt durch eine Reaktionsstrecke eines Hochdruckgaswaschers und
- Figur 2: eine teilweise Seitenansicht im Schnitt des in Figur 1 dargestellten Hochdruckgaswaschers.

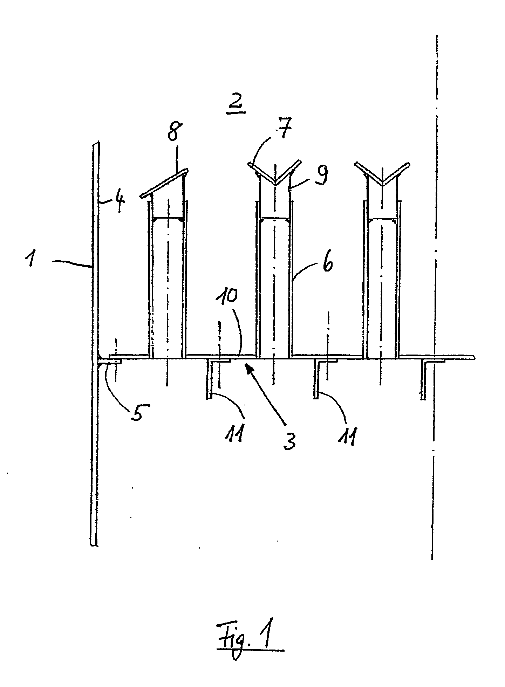

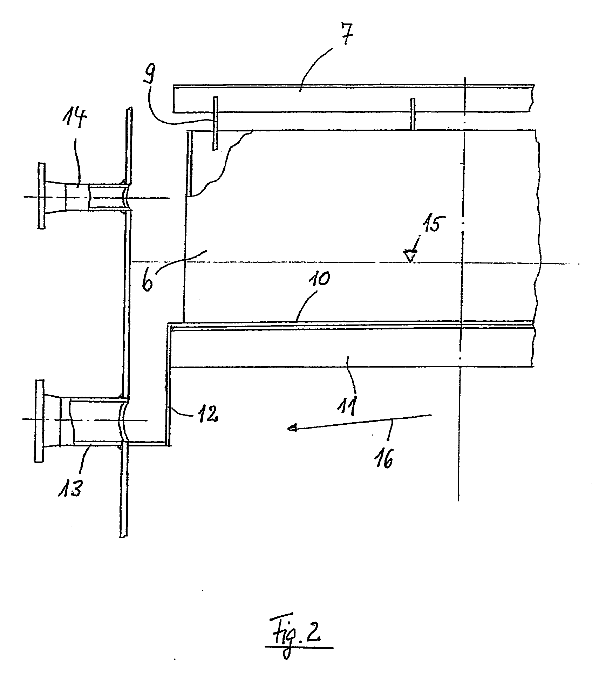

Das in den Figuren 1 und 2 in teilweisen Schnitten und in verschiedenen Ansichten wiedergegebene Ausführungsbeispiel zeigt als wesentliche Bestandteile eines Hochdruckgaswaschers einen Kaminabzugsboden 3 und eine Reaktionsstrecke 2. Ein solcher Hochdruckgaswascher kann aus einer oder mehreren übereinander angeordneten Realctionsstrecken 2 bestehen. Der Hochdruckgaswascher besteht, in welcher Ausführung auch immer, aus einem zylindrischen Behälter 1, der wie ausgeführt, eine oder mehrere Reaktionsstrecken 2 beinhalten kann. Innerhalb des Behälters 1 ist über dessen Umfang ein Flachstahlring 5 angeschweißt, auf dem ein aus Segmentblechen 10 bestehender Kaminabzugsboden 3 lösbar mittels Schrauben befestigt ist. Der Kaminabzugsboden 3 hat, wie aus Figur 2 zu entnehmen ist, in Richtung des Pfeils 16 ein Gefälle, um die Waschflüssigkeit gezielt ablaufen lassen zu können. Zur Stabilisierung des Kaminabzugsbodens 3 sind quer durch den Behälter 1 in Richtung des Gefälles verlaufende und an der Behälterwand 4 angeschweißte Winkelbleche 11 vorgesehen, auf denen die, den einen Kaminabzugsboden 3 bildenden Segmentbleche 10 ebenfalls lösbar verschraubt angeordnet sind.

Das zu reinigende Gas tritt von unten in die Reaktionsstrecke 2 ein. Der Gasdruck beträgt 6 bis 8 bar. Nach Passieren mehrerer nicht dargestellter Lagen Streckmetall strömt das Gas durch die definierten Bodendurchtritte in die Kamine 6, die aus Blechen gefertigt und rechteckig ausgeführt sind. Am Kaminaustritt sind an Stützen 9 befestigte Abdeckbleche 7, 8 in unterschiedlichen Formen vorgesehen. Derartige Abdeckbleche 7, 8 leiten den Gasstrom gezielt in die weitere Reaktionsstrecke 2 ein. Die Abdeckbleche 7 sind rinnenförmig ausgebildet und weisen einen nach oben offenen Winkel auf, der so zu wählen ist, dass bei Austritt des Gases aus den Kaminen 6 bei einem minimalen Druckverlust der größtmögliche Querschnitt in der Reaktionsstrecke 2 erzielbar ist. Im Randbereich des Behälters 1 weisen die dort angeordneten Kamine 6 dachartig schräg zur Mitte des Behälters 1 gerichtete Abdeckbleche 8 auf, um auf diese Weise die für den Waschprozess ungünstige Randgängigkeit des Gases zu vermeiden.

Im Gegenstrom wird das Waschmedium über nicht dargestellte Einspritzdüsen und Streckmetallpakete von oben her verteilt. Die angereicherte Flüssigkeit gelangt zum Teil über die Abdeckbleche 7, 8 und zum Teil direkt auf die Segmentbleche 10, ohne den Gasfluss und -verteilung negativ zu beeinflussen. Die angereicherte Flüssigkeit wird in der seitlich angeschlossenen Ablauftasche 12 bis zu einer definierten Füllstandshöhe 15 gesammelt, wie dies Figur 2 zeigt. Die Ablauftasche 12 dient gleichzeitig als Pumpenvorlage, wobei die Flüssigkeit über einen Ablaufstutzen 13 einer nicht dargestellten Saugleitung einer Pumpe und damit dem Waschprozess erneut zugeführt wird. Bei Überschreiten einer bestimmten Füllstandshöhe 15 wird die Flüssigkeit über den oberhalb des Kaminabzugsbodens 3 angeordneten Sicherheitsablauf 14 in den Sumpf des Waschers abgeführt.

### Bezugszeichenliste

- 1: Behälter
- 2: Reaktionsstrecke
- 3: Kaminabzugsboden
- 4: Behälterwand
- 5: Flachstahlring
- 6: Kamine
- 7: Abdeckblech
- 8: Abdeckblech
- 9: Stützen
- 10: Segmentbleche
- 11: Winkelbleche
- 12: Ablauftasche
- 13: Ablaufstutzen
- 14: Sicherheitsablauf
- 15: Füllstandshöhe
- 16: Pfeil

## Patentansprüche

1. Hochchdruckgaswascher zur Schwefelwasserstoffabscheidung aus einem schwefelwasserstoffhaltigen Gas, beispielsweise Koksofengas, der im wesentlichen aus einem zylindrischen mindestens eine Reaktionsstrecke aufweisenden Behälter besteht, wobei jeder Reaktionsstrecke Natronlauge als Waschmittel in unterschiedlicher Konzentration im Gegenstrom zu dem von unten über Kaminabzugsböden mit Abdeckblechen aufweisenden Kaminen zugeführten schwefelwasserstoffhaltigem Gas seitlich eingeführt und von oben eingedüst wird und das gereinigte Gas über einen Abzugsraum im oberen Teil des Behälters abgeführt und das angereicherte Waschmittel über die Kaminabzugsböden abgezogen wird, und dass unterhalb des untersten Kaminabzugsbodens und zwischen der Bedüsung und einem Kaminabzugsboden leicht benetzbare Streckmetalleinbauten vorgesehen sind, **dadurch gekennzeichnet, dass** der Kaminabzugsboden (3) an einem mit der Behälterwand (4) verschweißten Flachstahlring (5) lösbar befestigt und mit einem Gefälle versehen ist, und dass die durch einen vergrößerten Querschnitt einen geringeren Druckverlust gewährleistenden Kamine (6) eine, einen oberhalb des Kaminabzugsboden (3) angeordneten Sicherheitsablauf (14) überragende Höhe aufweisen und dass oberhalb der Kamine (6) und über deren Länge den Gasfluss gezielt leitende Abdeckbleche (7, 8) vorgesehen sind, die an den Kaminen (6) mittels Stützen (9) befestigt sind und dass zur Stabilisierung des aus Segmentblechen (10) bestehenden Kaminabzugsbodens (3) unter diesem in Abstand und parallel zu den Kaminen (6) verlaufend an der Behälterwand (4) angeschweißte Winkelbleche (11) vorgesehen sind, auf denen die Segmentbleche (10) mittels Schrauben lösbar befestigt sind.

2. Hochdruckgaswascher nach Anspruch 1, **dadurch gekennzeichnet, dass** die Abdeckbleche (7) ein rinnenförmiges, einen nach oben offenen Winkel bildendes Profil aufweisen.

3. Hochdruckgaswascher nach Anspruch 1, **dadurch gekennzeichnet, dass** die äußeren der Behälterwand (4) zugeordneten Kamine (6) dachartig schräg verlaufende Abdeckbleche (8) aufweisen, deren Gasaustritte zur Mitte der Reaktionsstrecke (2) hin größer sind als die zur Behälterwand (4) gerichteten Gasaustritte.

4. Hochdruckgaswascher nach Anspruch 1, **dadurch gekennzeichnet, dass** zum Auffangen des angereicherten Waschmittels auf dem Kaminabzugsboden (3) eine Füllstandshöhe (15) vorgesehen ist, wobei unterhalb des Kaminabzugsbodens (3) an dessen tiefster Stelle eine als Pumpenvorlage ausgebildete Ablauftasche (12) und oberhalb der Füllstandshöhe (15) ein Sicherheitsablauf (14) vorgesehen sind.

## Claims

1. A high-pressure gas scrubber for the elimination of hydrogen sulfide from a gas containing hydrogen sulfide, for example coke oven gas, which substantially consists of a cylindrical container, which encompasses at least one reaction section, wherein sodium hydroxide solution is laterally introduced and sprayed from above into each reaction section as the scrubbing agent in varying concentrations, in a counter current to the gas containing hydrogen sulfide, which is supplied from below via riser extraction floors comprising risers encompassing cover plates and wherein the scrubbed gas is discharged via an exhaust chamber in the upper section of the container and the enriched scrubbing agent is removed via the riser extraction floors, and that provision is made below the lowest riser extraction floor and between the spray elements and a riser extraction floor for easily wettable expanded metal baffles, **characterized in that** the riser extraction floor (3) is detachably fixed to a flat steel ring (5), which is welded to the container wall (4) and is provided with a gradient and **in that** the risers (6), which ensure a lower pressure loss as a result of an increased cross section, extend beyond a safety overflow (14), which is located above the riser extraction floor (3) and **in that** provision is made above the risers (6) and across their length for cover plates (7, 8), which conduct the gas flow in a targeted manner and which are fixed to the risers (6) by means of supports (9) and **in that**, for stabilizing the riser extraction floor (3) consisting of sheet segments (10), provision is made underneath the riser extraction floor (3) for angle plates (11) on which the sheet segments (10) are detachably fixed by means of screws, said angle plates (11) running at a distance and parallel to the risers (6) and being welded to the container wall (4).

2. The high-pressure gas scrubber according to claim 1, **characterized in that** the cover plates (7) encompass a trough-shaped profile, which forms an angle, which is open towards the top.

3. The high-pressure gas scrubber according to claim 1, **characterized in that** the outer risers (6) assigned to the container wall (4) encompass cover sheets (8), which run at an incline in such a manner that the gas escapes thereof are greater towards the center of the reaction section (2) than the gas escapes oriented towards the container wall (4).

4. The high-pressure gas scrubber according to claim 1, **characterized in that** provision is made on the riser extraction floor (3) for a level height (15) for absorbing the enriched scrubbing agent, wherein provision is made below the riser extraction floor (3) at the lowest location thereof for an overflow pocket (12), which is designed as a pump rack and provision is made for a safety overflow (14) above the level height (15).

## Revendications

1. Epurateur de gaz à haute pression, destiné à la séparation du sulfure d'hydrogène à partir d'un gaz à teneur en sulfure d'hydrogène, par exemple du gaz de four à coke, constitué essentiellement d'un conteneur cylindrique comportant au moins une section de réaction, de la lessive de soude étant alimentée par le côté en tant qu'agent nettoyant vers chacune des sections de réaction, en étant injectée par le haut selon différents degrés de concentration, à contre-courant par rapport au gaz à teneur en sulfure d'hydrogène qui est alimenté par le bas via des fonds de conduits d'évacuation de cheminée avec des cheminées comportant des tôles de recouvrement, et le gaz purifié étant évacué par une chambre d'évacuation dans la partie supérieure du conteneur, et l'agent nettoyant enrichi étant évacué par les fonds de conduits d'évacuation de cheminée, et des structures en métal déployé faciles à humidifier étant prévues en-dessous du premier fond de conduite d'évacuation de cheminée en partant du bas, ainsi qu'entre la pulvérisation et un fond de conduite d'évacuation de cheminée, **caractérisé en ce que** le fond de conduite d'évacuation de cheminée (3) est pourvu d'une pente et fixé sur un anneau en acier plat (5) soudé avec la paroi de conteneur (4), et **en ce que** les cheminées (6) garantissant une plus faible perte de pression grâce à une section transversale agrandie comportent une hauteur dépassant d'une évacuation de sécurité (14) disposée au-dessus du fond de conduite d'évacuation de cheminée (3), et **en ce que** des tôles de recouvrement (7, 8) conduisant le flux de gaz de manière ciblée sont fixées aux cheminées (6) au moyen de supports (9) tout en s'étendant sur la longueur de celles-ci, et **en ce que** pour la stabilisation du fond de conduite d'évacuation de cheminée (3) constitué de tôles de segment (10), des tôles angulaires (11) soudées à la paroi de conteneur (4), sur lesquelles sont fixées de manière amovible les tôles de segment (10) au moyen de vis, sont prévues sous ledit fond de conduit en s'étendant à distance des cheminées (6) et parallèlement à celles-ci.

2. Epurateur de gaz à haute pression selon la revendication 1, **caractérisé en ce que** les tôles de recouvrement (7) comportent un profil en forme de gouttière, formant un angle ouvert vers le haut.

3. Epurateur de gaz à haute pression selon la revendication 1, **caractérisé en ce que** les cheminées (6) extérieures attribuées à la paroi de conteneur (4) comportent des tôles de recouvrement (8) s'étendant de manière inclinée à la façon d'une toiture, dont les sorties de gaz orientées vers le milieu de la section de réaction (2) sont plus grandes que les sorties de gaz orientées vers la paroi de conteneur (4).

4. Epurateur de gaz à haute pression selon la revendication 1, **caractérisé en ce qu'**une hauteur de niveau de remplissage (15) est prévue sur le fond de conduite d'évacuation de cheminée (3) pour la récupération de l'agent nettoyant enrichi, une poche d'évacuation (12) conçue en tant que dispositif de pompe est prévue en-dessous du fond de conduite d'évacuation de cheminée (3), tout en bas de celui-ci, et une évacuation de sécurité (14) est prévue au-dessus de la hauteur du niveau de remplissage (15).
